# EUROPEAN PATENT APPLICATION

(11) **EP 1 355 242 A1**
(43) Date of publication of application: **22.10.2003**
(21) Application number: 03014555.1
(22) Date of filing: 12.02.2001
(51) Int. Cl.: G06F 17/30, G06F 19/00

(54) **Color matching method for automotive refinishing**

(30) Priority: 28.03.2000 US 536137
(62) Divisional of application: 01103205.9
(71) Applicant: E.I. DUPONT DE NEMOURS AND COMPANY, Wilmington, Delaware 19898 (US)
(72) Inventor: Benton, Daniel A., Newark, Delaware 19711 (US); Campbell, Joseph Francis, Shelby Township, Michigan 48315 (US)
(74) Representative: Gritschneder, Martin, Dipl.-Phys.

(57) **Abstract**

A method for determining a refinish colorcoat composition that machtes the color and the color effect of a vehicle's original refinish, which comprises in any workable order:
(a) ascertaining the manufacturer's paint code, model year, site of manufacture, and optionally date of manufacture of a vehicle needing refinishing;
(b) searching a database of refinish colorcoat compositions wherein each refinish composition in the database has assigned thereto a manufacture's paint code, a vehicle model year, a vehicle site of manufacture, and optionally a vehicle manufacture date; and,
(c) identifying the refinish colorcoat composition in the database that matches the paint code, model year, manufacturing site, and optionally manufacturing date extracted from the vehicle, thereby revealing the refinish colorcoat composition that matches the color and color effect of the vehicle's original finish.

## Description

### BACKGROUND OF THE INVENTION

This invention relates to color matching of paint on a vehicle, and in particular to a method for providing a colorcoat composition, suited for refinishing monocoat, clearcoat/colorcoat, or tricoat finishes of vehicles such as automobiles or trucks, that matches the color of the vehicle's original finish.

Monocoat, clearcoat/colorcoat, and tricoat finishes for automobiles and trucks have been used in recent years and are very popular. Nowadays, most common are the clearcoat/colorcoat finishes which utilize a pigmented colorcoat or basecoat to impart the desired color and color effect, e.g., solid, metallic, or pearlescent effect, to the vehicle, over which is applied a clearcoat which provides protection for the colorcoat and improves the appearance of the overall finish such as gloss and distinctness of image. Monocoat finishes do not employ clearcoats, while tricoat finishes utilize an intermediate colorcoat or midcoat between the basecoat and clearcoat for a unique color effect.

Repair of such finishes that have been damaged, e.g., in a collision, has been difficult in that the autobody repair shop painter may have to go to great lengths to locate the correct aftermarket refinish colorcoat composition that matches the color and color effect of the vehicle's original finish. While each colorcoat used in a vehicle's original finish is manufactured to a given color standard, so that, in theory, all vehicles painted with a given colorcoat will appear the same color, due to a host of different variables, such as changing atmospheric conditions and use of different application techniques, the appearance of a given colorcoat may actually vary from plant to plant and over different times of the year. Consequently, vehicles manufactured at one plant may appear a different color than vehicles painted with the same colorcoat at another plant. A number of alternate refinish colorcoat compositions must therefore be developed for each original manufacture colorcoat composition, yet presently there is no quick and easy and inexpensive way for the refinisher to determine which of the aftermarket alternate formulations is the best color match for a particular refinish job.

Various color matching techniques have been used in the past to aid the refinisher in selecting the correct alternate but all suffer from certain significant drawbacks. For instance, visual tools such as refinish color chips have been used on many occasions to find a suitable match. However, visual color matching is time-consuming, cumbersome and subject to many errors as a result of poor lighting conditions, operator variances, or variation to the original standard by the paint manufacturer. Another method involves the use of vehicle data, such as its make, model year and manufacturer's paint code. The paint code is used to identify all the different aftermarket refinish colorcoat compositions created for that paint code. Historical information further defining the matching alternate is attached to each formula which helps the refinisher define which is the best match for that make and model year in question. Such information is gathered from a number of sources and resides in either electronic or printed formats. Accessing such a bank of information is very time-consuming and does not always lead to the correct paint match. A further method commonly employed involves the use of a computer controlled colorimeter or spectrophotometer which measures the color values of an unaffected area of the paint on the vehicle and compares these values with a predetermined look up table which contains color data for the various refinish colorcoat formulations. From that table, the computer locates the best color match for the vehicle's original paint color and color effect within an acceptable tolerance. While the latter method is much less time-consuming than former methods and increases the percentage of color match selections for the vehicle being refinished, it requires placement of expensive optical equipment in the autobody shop which is undesirable.

Thus, a continuing need still exists for a color matching method that is quick and easy to use, does not require expensive equipment to operate, and achieves a color match for an automotive finish that is correct a high percentage of the time.

### SUMMARY OF THE INVENTION

The invention concerns a computer-controlled method for determining the formula of a colorcoat composition, suited for refinishing monocoat, clearcoat/colorcoat, and tricoat finishes of vehicles, that matches the color and color effect of the vehicle's original finish within an acceptable color tolerance, which comprises in any workable order:
(a) inputting the vehicle's VIN (vehicle identification number) into a computer configured to receive such information;
(b) inputting the manufacturer's paint code for the vehicle into the computer also configured to receive such information;
(c) processing the input data by extracting from the VIN number the characters in the positions that indicate at least the model year and site of manufacture for the vehicle being refinished, and placing these characters in a VIN id string;
(d) accessing a computer-readable data file that contains the manufacturer's paint codes, refinish data assigned to each paint code that indicates all the approved matching refinish colorcoat compositions created for that particular paint code, and a VIN id string assigned to each refinish colorcoat composition that indicates, at least, the model year and manufacturing site for which that particular refinish colorcoat composition was developed;
(e) executing a search for a refinish colorcoat composition in the computer-readable data file that has assigned thereto a paint code and a VIN id string that match both the paint code and VIN id string of the vehicle in question;
(f) displaying in human-readable form, on a screen of a computer monitor or in printed form, the matching refinish colorcoat composition uncovered in the search, thereby identifying the refinish colorcoat composition that has been verified to match the color and color effect of the original finish of the vehicle being refinished within an acceptable color tolerance.

The method of the invention may also include the further steps of:
(g) after step (f), preparing an actual refinish colorcoat composition from the composition displayed; and,
(h) applying the prepared colorcoat composition to an area of the vehicle requiring repair or refinishing.

### BRIEF DESCRIPTION OF THE DRAWINGS

FIG. 1 is a block diagram of the standardized VIN format presently used on all passenger cars and light trucks sold in the United States.
FIG. 2 is a block diagram flow chart of the color matching method of the present invention.
FIG. 3 is a block diagram flow chart of further embodiments of the color matching method of the present invention.

### DETAILED DESCRIPTION OF THE INVENTION

In the repair or refinish of monocoat, clearcoat/colorcoat, or tricoat finishes of vehicles such as automobiles or trucks, the autobody repair shop painter must be able to produce a finish on the vehicle that mimicks both the color and color effect (e.g., solid color, metallic, or pearl effect) of the vehicle's original finish. From the customer's standpoint, color mismatches that can be detected by the human eye significantly detract from the vehicle's appearance and are usually unbearable. The success of the refinisher's business is therefore highly dependent on the quality of his color matches.

Aftermarket refinish colorcoat compositions are available for each paint code used by the vehicle manufacturer. Autobody shops are required to use aftermarket refinish formulations that dry and cure at ambient or slightly elevated temperatures, as opposed to original factory paints, to avoid damaging the vehicle's upholstery, wiring, stereo, and other heat sensitive components. While the refinisher can easily ascertain the vehicle manufacturer's paint code, since the paint code is located on every vehicle in a conspicuous place, typically on the driver's side door jamb or in the glove box, nonetheless a number of challenges still face the professional refinisher in trying to match the color of the original finish.

As mentioned above, paints used by the vehicle manufacturer, even though supplied under the same paint code, are known to sometimes vary in color from plant to plant and during different times of the year. Consequently, vehicles produced at one plant may appear a different color than vehicles painted with the same factory paint at another plant. Aftermarket refinish colorcoat compositions must therefore be created for each significant color variation. Field inspectors are assigned to monitor such color variations of a particular factory paint by taking color readings of the vehicles produced at different plants using a colorimeter or spectrophotometer and recording any shifts in a vehicle's color position. Usually, as a result of this work, a number of alternate refinish formulations have to be developed for each paint code. However, until the present invention, there had been no quick and easy and yet still inexpensive way for the refinisher to properly select which of the alternate formulations is the best match for a particular refinish job.

The present invention is directed to a novel method for determining the correct refinish formula for a particular refinish job using the vehicle's unique VIN (vehicle identification number), which is used in a novel way to track the variability in color of a particular manufacturer's paint and make it easy to determine which refinish composition is the best match for a particular vehicle.

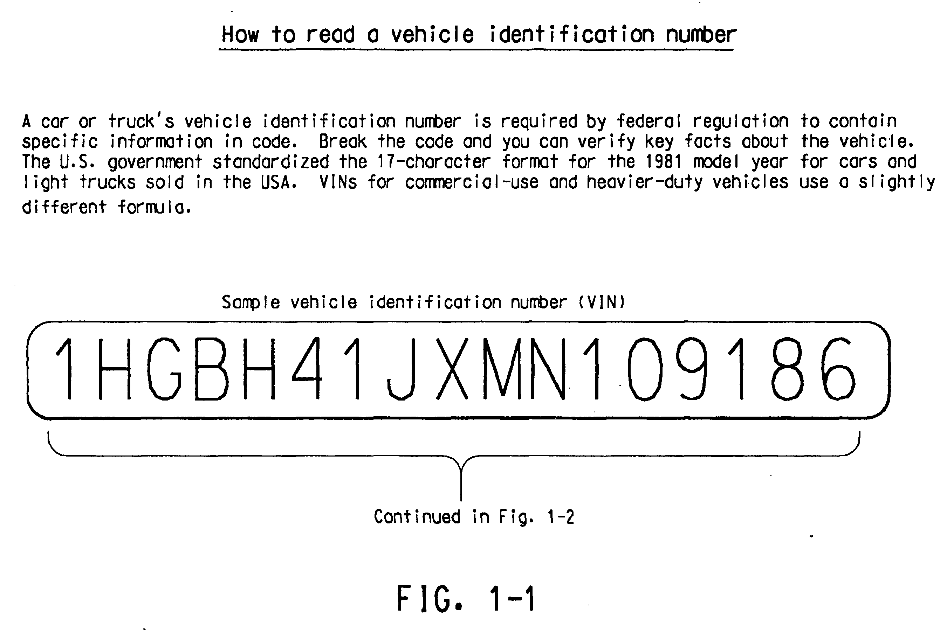

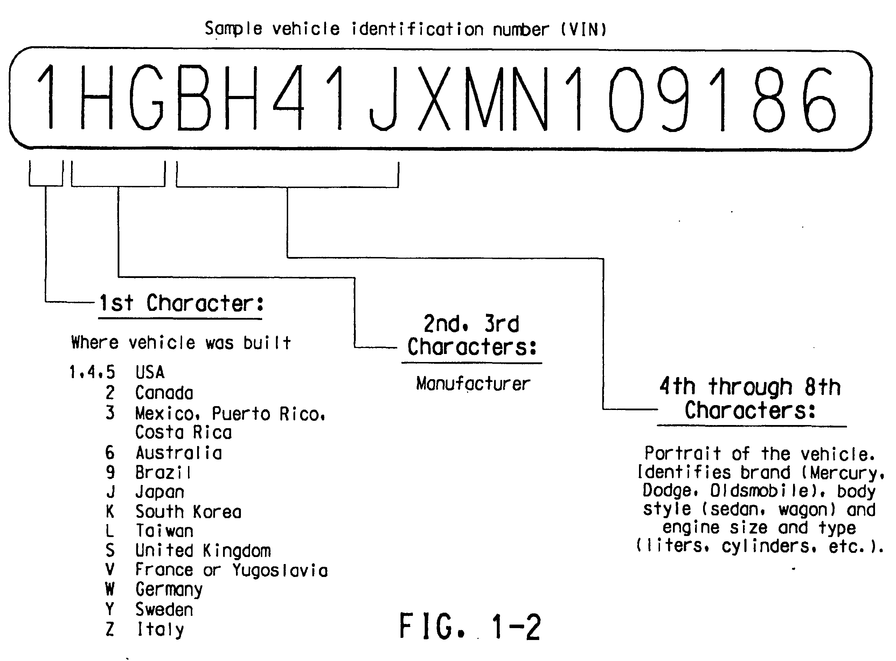

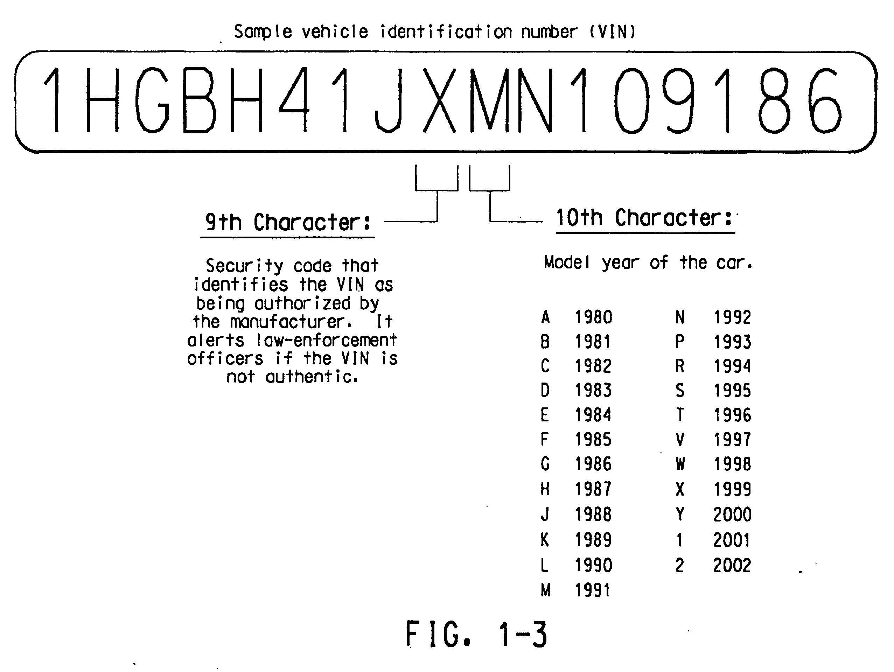

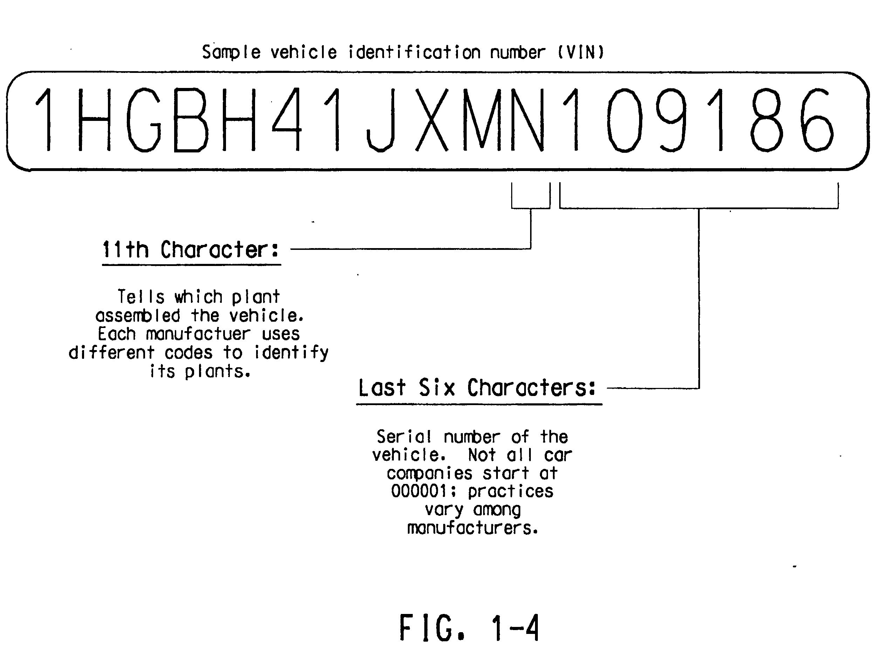

VINs are currently used by all vehicle manufacturers to record relevant information about the vehicle that may be useful later to the vehicle manufacturer, highway safety administrators, insurance investigators, and law enforcement officers, such as make, model, model year, site of manufacture, production sequence, etc. In most countries today, VINs are required by law. For example, today the U.S. government requires all cars and trucks made for U.S. sale to carry a 17-character vehicle identification number, which is made up of a combination of 17 numbers and letters. Each position in the VIN (numbered from left to right) is assigned a certain meaning which is applicable to all vehicle manufacturers. In addition, the characters that are used in each position are assigned a meaning, all of which is public information. Once one obtains the meaning for each position and each character, the VIN code can be broken and all the key facts about a vehicle can be obtained. In the U.S. standardized 17-character format, as shown in FIG. 1, the first 11 characters define particular features of the vehicle, while the last 6 characters identify the production sequence of that vehicle. Within the first 11 characters, the 10^{th} and 11^{th} characters, in particular, are used to identify the vehicle's model year and site of manufacture, respectively. Other information that can be extracted from the current U.S. VIN system is provided in FIG. 1.

In the present invention, the alternate refinish colorcoat compositions developed for each paint code of a particular manufacturer are assigned an identification number that uses the same characters used in the manufacturer's VIN to indicate, at a minimum, the model year and assembly plant for which a particular alternate was developed. This identification number is otherwise referred to herein as a "VIN id string". In the VIN system currently used, the VIN id string assigned to a refinish composition will at a minimum correspond to the characters found in the 10^{th} and 11^{th} positions of the VIN number. Other information contained in the vehicle's VIN can also be provided in the VIN id string, such as the make, model, and/or production sequence of the vehicle for which the refinish composition was developed, etc., in order to further assist in identifying which alternate refinish formulations match which vehicles.

To practice the method of the present invention, a general purpose computer, preferably a personal computer having a CPU (central processing unit), a memory, means for loading an application program into a defined address space of the memory, and a computer monitor is generally required. A printer may also be useful. A modem for accessing the application program from a remote location, e.g., via the Internet, might also be useful. The method of the invention for retrieving the correct refinish colorcoat composition that matches the color and color effect of a vehicle's original finish needing repair or refinishing within an acceptable color tolerance involves the following steps in any workable order.

First, the refinisher must ascertain the VIN number and manufacturers paint code associated with the vehicle in question, i.e., the vehicle requiring refinishing. The VIN is typically located on the driver's side of the vehicle in three places, namely on the dashboard or windshield post, on the safety certification label on the driver's side door, or on the driver's side door jamb. The paint code is usually stamped or decaled on the driver's side door jamb or in the glove box. The VIN and paint code are then entered into a computer that has been loaded with an application program that is configured to receive the input data and process the data according to the steps described below. The application program may be stored in the computer memory or on any other customary computer-readable storage medium or at remote location accessible over the Internet. As will be appreciated by one of ordinary skill in the art, the software code for this application program can be easily written by a programmer having the most basic programming knowledge.

The input data is processed by extracting from the VIN number entered above the characters in the positions that indicate the model year and site of manufacture for the vehicle in question and placing these alphanumeric characters in a VIN id string. In the current VIN system, the characters located in the 10^{th} and 11^{th} positions of the VIN are extracted in this step and placed in a string. In an alternative embodiment, rather than having the computer extract the characters from the VIN, the application program may prompt the refinisher to manually extract characters from the VIN and input only the characters that indicate the model year and manufacturing site, i.e., only the 10^{th} and 11^{th} characters, instead of the entire VIN, and use this entry to form the VIN id string.

The computer is further instructed to access a computer-readable data file that contains the manufacturer's paint codes, refinish data assigned to each paint code that indicates all the approved refinish colorcoat compositions of a given refinish paint manufacturer created for that particular paint code, and a VIN id string assigned to each refinish colorcoat composition that indicates the model year and manufacturing site for which that particular refinish colorcoat composition was developed. The data file may be stored in the computer memory or on any other customary computer-readable storage medium or at a specific location accessible over the Internet. The data file is usually created, maintained and updated by the refinish paint manufacturer. Basically, it contains the information gathered by the field inspectors mentioned above who track the color variations in a given colorcoat composition for a given model year and pass such information along to the refinish paint formulators who develop alternate refinish formulations as needed.

Once the data file is accessed, the computer is instructed to find in the data file a refinish colorcoat composition, if any, that has assigned thereto a paint code and a VIN id string that match both the paint code and VIN id string associated with the vehicle in question. This function is typically performed by comparing the paint codes and VIN id strings preassigned to each refinish colorcoat composition in the computer-readable data file with the paint code and VIN id string obtained from the vehicle in question to find the refinish colorcoat composition that matches the paint code and VIN id string of the vehicle in question.

If the search is successful and a match is located, the computer is then instructed to display in human-readable form, preferably on the computer monitor screen or by any other means such as via a printer, the refinish colorcoat composition uncovered in the search, thereby revealing the refinish colorcoat composition that matches the color and color effect of the original finish of the vehicle in question within an acceptable color tolerance. As used herein, the term "acceptable color tolerance" means a refinish composition that is within a blendable color difference with the color of the original finish. The refinish composition displayed might be the entire formula (including ingredients and mix instructions), or may merely include the aftermarket company's stock code for the refinish composition or some other meaningful indication of the refinish composition, whereupon another data file might need to be accessed to obtain the entire formula.

If, on the other hand, the search is unsuccessful and no match is found, it is desired that the computer prompt the refinisher to verify the input data. If the data entered was correct, then its is desired that the computer instruct the refinisher to use the other existing color retrieval tools to locate the matching refinish colorcoat composition, or provide an alternative suggestion from within the computer application.

Since color positions of vehicles painted with the same colorcoat at the same assembly plant during the same model year may shift during different times of the year, it is likely that different refinish formulations will be needed on vehicles having the same VIN characters for the model year and site of manufacture (i.e., having the same VIN id string). In order to determine the best match in this situation, the method of the invention preferably also includes an additional input data field for the manufacture date of the vehicle. In this program enhancement, prior to processing the input data described above, the refinisher will also ascertain the manufacture date for the vehicle in question. The 4-character manufacture date (mo/yr) is usually stamped on the driver's side door jamb. The manufacture date is then entered into the computer along with the VIN and paint code.

The input data is processed in the same manner described above; however, the search is extended to find a refinish formulation that matches the paint code, VIN id string, and manufacture date of the vehicle being refinished. To execute this search, the computer-readable data file not only contains a data field for the manufacturer's paint codes, refinish data assigned to each paint code that indicates all the approved refinish colorcoat compositions of a given refinish paint manufacturer created for that particular paint code, and a VIN id string assigned to each refinish colorcoat composition that indicates the model year and manufacturing site for which that particular refinish colorcoat composition was developed, but also contains a data field for the manufacture date or range of manufacturing dates assigned to each refinish colorcoat composition that indicates the manufacture dates for which that particular refinish composition is applicable. In this embodiment, it may also be possible to extract the manufacture date from the last six characters of the VIN which represent the VIN production sequence number.

Although less preferred, the method of this invention can also be practiced without the aid of a computer using appropriate printed look-up tables containing the aftermarket refinish data recited above.

The method of the invention may also include, after a successful match is found, the further steps of preparing an actual refinish colorcoat composition from the composition reported above. The refinish paint preparation could be accomplished by manual mixing or automated processing wherein the components of the recommended formula are automatically weighed and blended together using appropriate computer controls.

Prior to mixing the actual refinish composition, there may be a desire by the refinisher to verify or improve the color of the displayed refinish formula. Since the composition prepared may not be an identical match to the color of the vehicle's original finish, e.g., due to weathering, it is usually prudent for the refinisher to verify and, if necessary, improve the color position of the refinish composition. This may be accomplished by taking a colorimeter or spectrophotometer reading on an unaffected area of the vehicle's original finish and comparing this reading to color values previously assigned to the refinish composition and stored within another data field within the refinish formulation data file. Then, using known color matching techniques, the computer will calculate the difference in color values between the original paint and the refinish paint and the amount of pigments required to adjust within the recommended composition to bring the refinish paint within a tighter tolerance, and display the electronically adjusted refinish formula.

Following the preparation of the refinish colorcoat composition, the refinisher may want to further verify the color of the actual formula versus the vehicle's original finish before actually spraying the paint on the vehicle. This may be accomplished by applying the mixed colorcoat composition onto a test panel and allowing it to dry and cure. The test panel is then visually compared to the vehicle in question. If a closer match is needed, the refinisher can readily adjust the color of the colorcoat to improve the match by individual color shading techniques well known in the art. The composition ultimately provided by this method must be a blendable color match to the original finish.

Once the desired match is obtained, the prepared colorcoat is then applied to the area of the vehicle requiring repair or refinishing by conventional means, typically using conventional spray equipment, and dried and cured to a finish that matches the color and color effect of the vehicle's original finish.

The refinish colorcoat composition obtained by the method of this invention may be suited for refinishing a monocoat finish, a basecoat in a basecoat/clearcoat finish, or a basecoat or midcoat in a basecoat/midcoat/clearcoat tricoat finish. Since tricoat finishes require two colorcoats, namely a basecoat and a midcoat, the method of this invention usually displays the matching basecoat formulation on the computer and attached to that basecoat formulation is the identification of the midcoat that is to be used with that particular basecoat.

In a refinish operation, the basecoat which may be either a solvent based composition or a waterborne composition is first applied to the vehicle such as an automobile or truck by spraying, e.g., air atomized paint spraying, or other conventional means and then dried to at least remove solvent or water before the clearcoat which may be either a solvent based or a waterborne composition is applied usually wet-on-wet by spraying or other conventional means and both are cured together at ambient or slightly elevated temperatures, of in general, less than 100°C, preferably less than 65°C. In monocoat systems, no clearcoat is used. Whereas in tricoat systems, a midcoat is applied usually wet-on-wet over the basecoat before the clearcoat is applied.

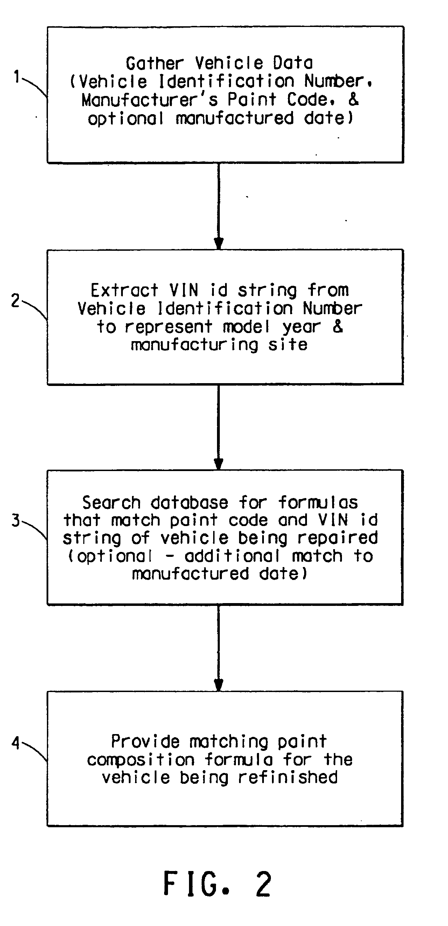

With reference now to FIG. 2, the functioning of the method of the invention that can be used to retrieve the correct aftermarket refinish colorcoat composition for a particular refinish job is shown. The method of FIG. 2 may be practiced manually or by a computer acting under a program. In the method shown, the professional refinisher gathers vehicle data, as shown in block 1, including the manufacturer's paint code and the VIN number (and optional vehicle manufacture date). Next, extracted from the VIN, at a minimum, is the model year and manufacturing site information for that vehicle that is encoded in the VIN, as shown in block 2. The manufacturer's paint code, model year, and manufacturing site (and opt. manufacture date) are then used as identifiers for locating the corresponding matching refinish composition for that vehicle. In the next step, as shown in block 3, a search is executed in a database of refinish formulations to find a refinish paint formulation that has assigned thereto the three (opt. four) identifiers extracted from the vehicle in question. Once a match is found, as shown in block 4, the corresponding matching refinish formula can be retrieved.

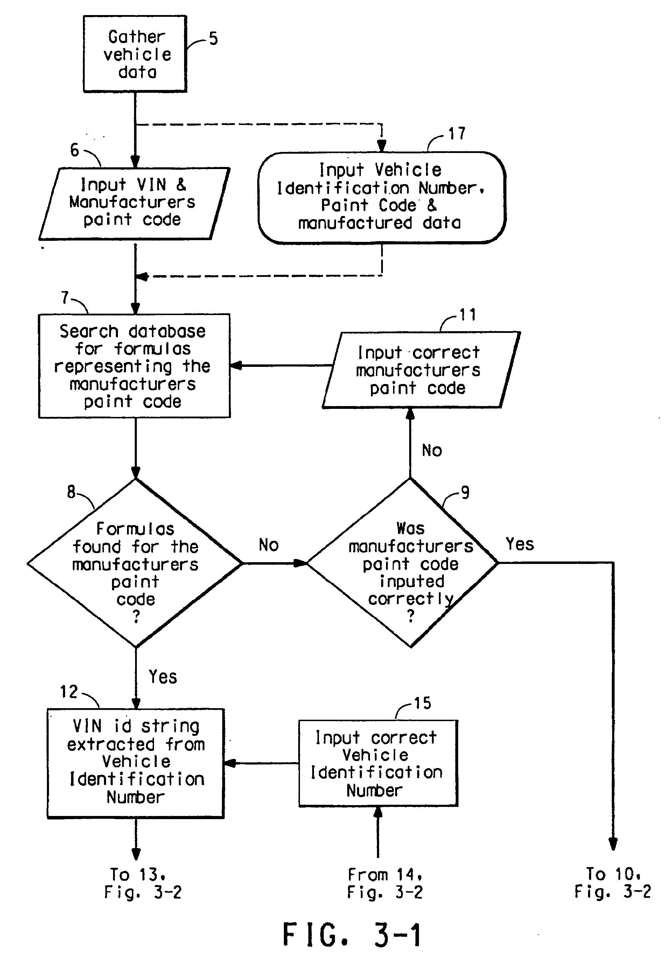

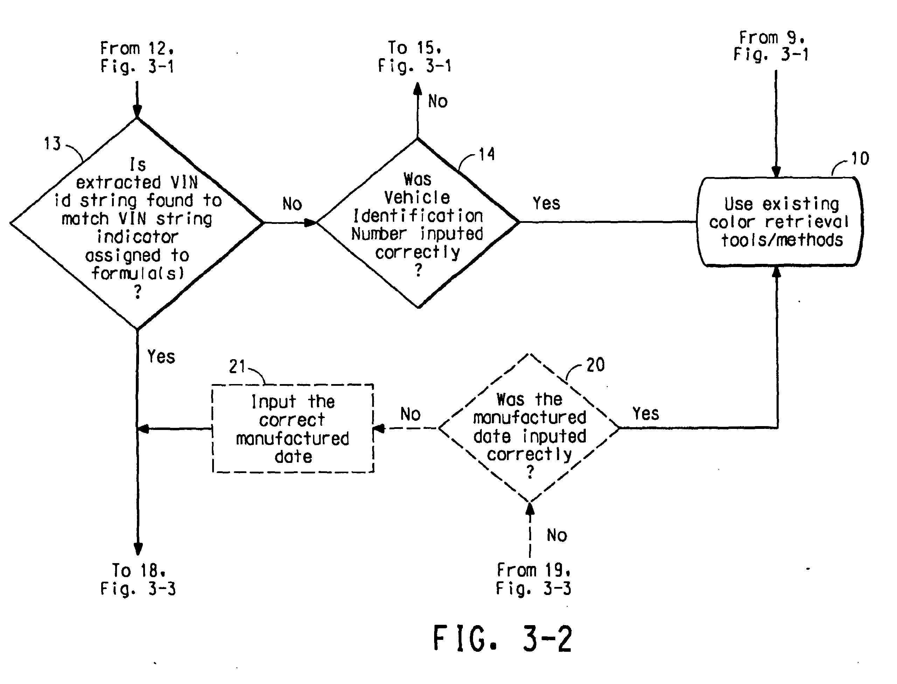

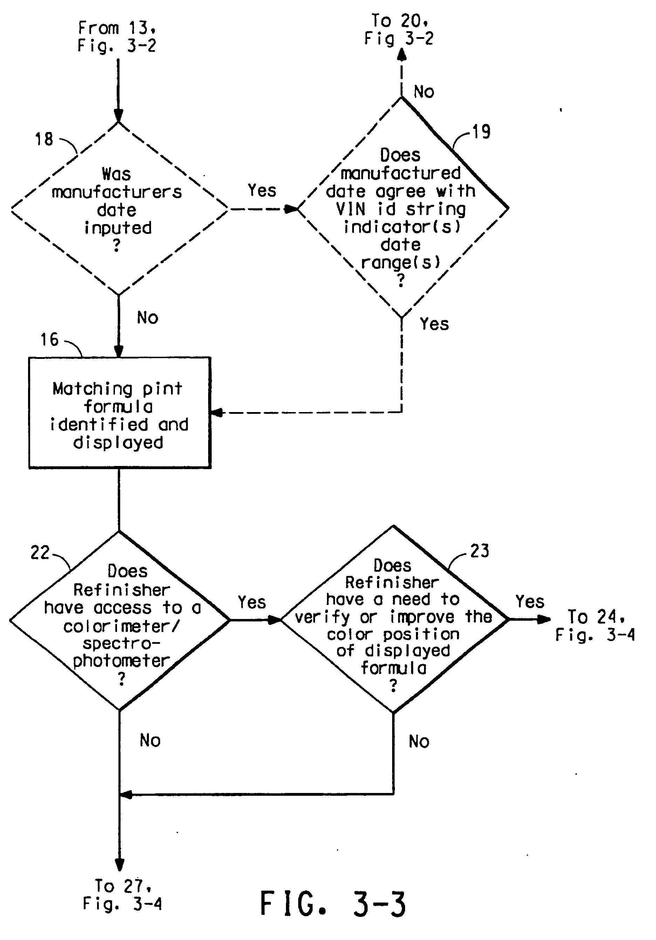

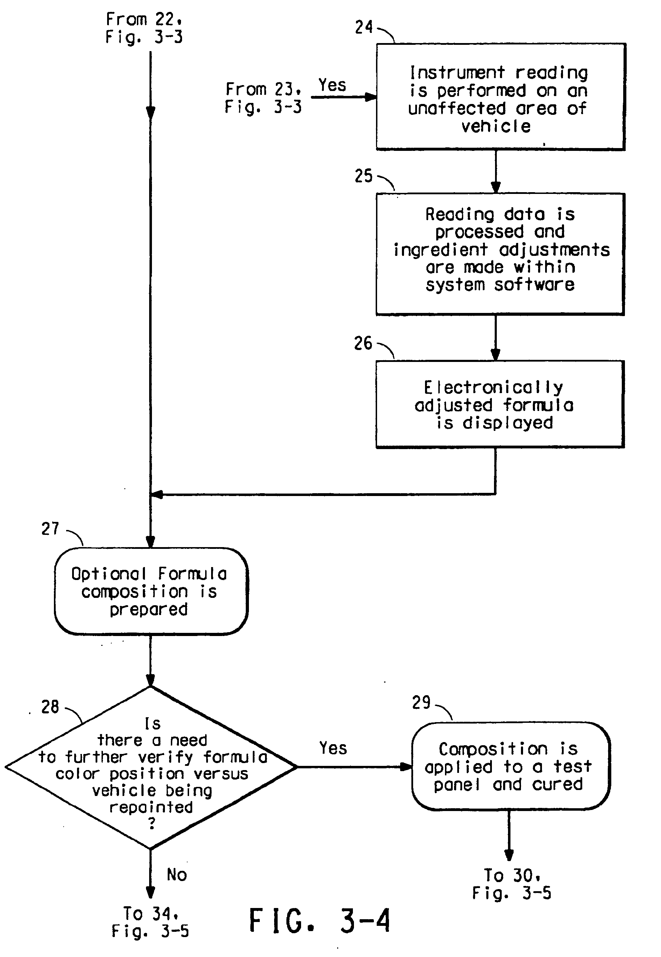

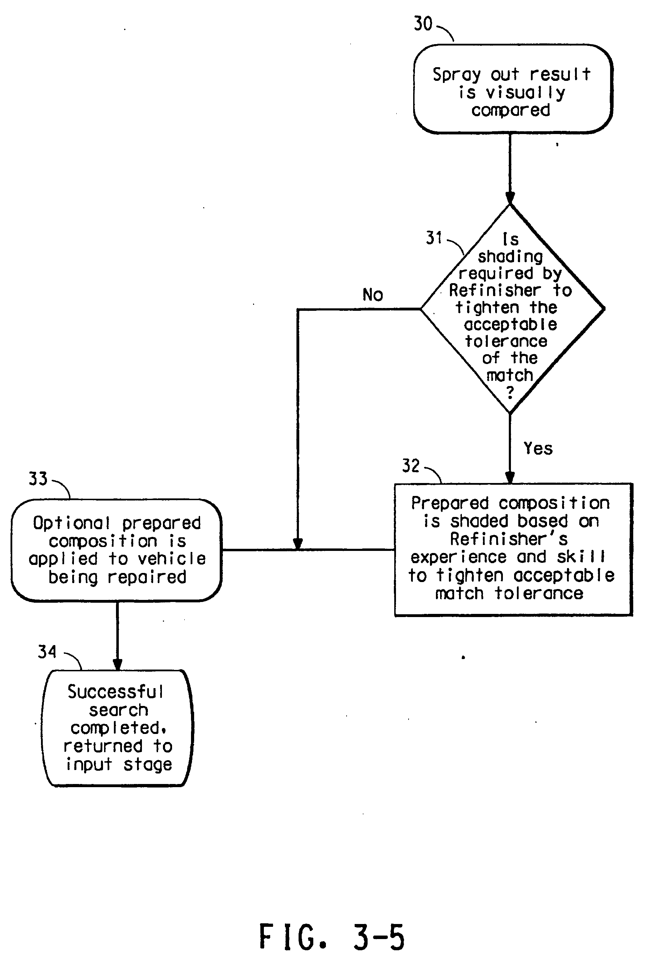

With reference now to FIG. 3, two versions of the software program that can be used to retrieve the correct refinish information are shown, namely the basic version and the enhanced version which utilizes the vehicle manufacture date in addition to the VIN and manufacture paint code. The dashed lines in FIG. 3 indicate the additional steps employed in the enhanced version. The basic version will be described first. The first step in the basic version, as shown in block 5, is for the refinisher to gather data from the vehicle in question, including the manufacturer's paint code and VIN number. The program prompts the user to enter the VIN and manufacturer's paint code into the computer, as shown in block 6. The program then processes the input data by searching a refinish paint database, as shown in block 7, for refinish formulas that have assigned thereto the manufacturer's paint code entered above. If no formulas are found with a matching paint code when at block 8, the program prompts the user to verify the paint code and queries whether the paint code is inputted correctly, as shown in block 9. If so, the program prompts the user to use other color retrieval methods and the program terminates, as shown in block 10. If not, the program prompts the user to reenter the correct paint code, as shown in block 11, and the program returns to searching the database for refinish formulas with matching paint codes.

If a paint code match is found when at block 8, the program next extracts from the VIN number entered above the characters in the positions that indicate the model year and manufacturing site for the vehicle being refinished, otherwise referred to as the VIN id string, as shown in block 12. The program then executes a search, as shown in block 13, to determine whether any of the refinish formulas uncovered in the previous step have assigned thereto a VIN id string data field that matches the VIN id string extracted from the vehicle in question. If no formulas are found with a matching VIN id string when at block 13, the program prompts the user to verify the vehicle's VIN and queries whether the VIN previously entered is correct as shown in block 14. If so, the program prompts the user to use other color retrieval methods and the program terminates, as shown in block 10. If not, the program prompts the user to reenter the correct VIN, as shown in block 15, and the program returns to searching the database for the refinish formulas with matching VIN id strings.

If a VIN id string match is found, the formula or stock code of the aftermarket refinish paint formula that has been verified to match the color and color effect of the original finish of the vehicle in question is displayed on a computer monitor screen for the refinisher to view, as shown in block 16. Once the matching formula is displayed, the program queries the user whether a new search is desired. If so, the computer program returns to the input data prompts shown in block 6.

In the enhanced version, the program prompts the user to enter the manufacture date for the vehicle in question as well the paint code and VIN, as shown in block 17, and after the program has located refinish formulas with matching paint codes and VIN id strings, the program queries the user whether the manufacture date was inputted, as shown in block 18. If so, the program searches the refinish formulas located above for a manufacture date range assigned thereto that encompasses the manufacture date entered above, as shown in block 19. If no match is found, the program prompts the user to verify the manufacture date and queries whether the manufacture date was entered correctly, as shown in block 20. If so, the program prompts the user to use other color retrieval tools and terminates, as shown in block 10. If not, the program prompts the user to enter the correct vehicle manufacture date, as shown in block 21, and the program returns to searching the refinish formulas for a manufacture date match. If a match is found (or if the user did not enter a manufacture date), the program then identifies the refinish formula that has been verified to match and displays the matching formula on the computer screen, as shown in block 16.

Prior to mixing the actual refinish composition, there may be a desire by the refinisher to verify or improve the color match of the displayed refinish formula. If so and the refinisher has access to a colorimeter or spectrophotometer, as indicated in block 22, the refinisher may want to perform a color check on the displayed composition, as shown in block 23. This is done by-taking an instrument reading on an unaffected area of the vehicle, as shown in block 24, comparing this reading to color values previously assigned to the refinish composition and stored in the refinish formulation data file, and adjusting the amount of pigments in the refinish formulation by known color matching software routines built into or linked to the program, to bring the refinish paint within a closer match, as shown in block 25. The computer then displays the electronically adjusted refinish formula, as shown in block 26.

After the refinish composition is prepared, as shown in block 27, the refinisher may want to further verify the color of the actual formula versus the vehicle's original finish before spraying the paint on the vehicle, as shown in block 28. If so, the composition can be sprayed out onto a test panel, as shown in block 29, and cured. The spray out result is then visually compared to the finish on the vehicle, as shown in block 30. If a closer match is desired, as shown in block 31, the refinisher might tighten the tolerance of the match, as indicated in block 32, using well known color shading techniques combined with experience. After the paint is prepared and desired color checks have been made, if any, the paint can be applied to the vehicle to complete the particular refinish job, as shown in block 33.

In summary, the method of this invention is quick and easy to use, does not require expensive equipment to operate, and achieves a color match for a vehicle's original finish that is correct a good percentage of the time.

## Claims

1. A method for determining a refinish colorcoat composition that machtes the color and the color effect of a vehicle's original refinish, which comprises in any workable order:
(a) ascertaining the manufacturer's paint code, model year, site of manufacture, and optionally date of manufacture of a vehicle needing refinishing;
(b) searching a database of refinish colorcoat compositions wherein each refinish composition in the database has assigned thereto a manufacture's paint code, a vehicle model year, a vehicle site of manufacture, and optionally a vehicle manufacture date; and,
(c) identifying the refinish colorcoat composition in the database that matches the paint code, model year, manufacturing site, and optionally manufacturing date extracted from the vehicle, thereby revealing the refinish colorcoat composition that matches the color and color effect of the vehicle's original finish.

2. The method of claim 1 as practiced by a computer acting under a program.

3. The method of claim 1 wherein the model year and site of manufacture are ascertained from the VIN (vehicle identification number).
